(19) Europäisches Patentamt / European Patent Office / Office européen des brevets

(11) **EP 2 669 162 B1**

(12) **EUROPEAN PATENT SPECIFICATION**

(45) Date of publication and mention
of the grant of the patent:
**06.04.2016 Bulletin 2016/14**

(51) Int Cl.:
**B62J 6/02** (2006.01)          **B60Q 1/115** (2006.01)
**B60Q 1/18** (2006.01)          **B60Q 1/12** (2006.01)
**B62J 17/02** (2006.01)          **B62J 29/00** (2006.01)
**B62J 17/04** (2006.01)

(21) Application number: **13169474.7**

(22) Date of filing: **28.05.2013**

(54) **Sub headlight unit for use in vehicle that leans into turns**

Unterscheinwerfereinheit zur Verwendung in einem sich in Kurven neigenden Fahrzeug

Module de phare auxiliaire pour véhicule s'inclinant dans les virages

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.05.2012 JP 2012125269**

(43) Date of publication of application:
**04.12.2013 Bulletin 2013/49**

(73) Proprietor: **Yamaha Hatsudoki Kabushiki Kaisha
Iwata-shi, Shizuoka 438-8501 (JP)**

(72) Inventors:
• **Inoue, Takehiro
Iwata-shi, Shizuoka 438-8501 (JP)**
• **Kosugi, Makoto
Iwata-shi, Shizuoka 438-8501 (JP)**

(74) Representative: **Grünecker Patent- und
Rechtsanwälte
PartG mbB
Leopoldstraße 4
80802 München (DE)**

(56) References cited:
**EP-A1- 1 473 215          EP-A2- 2 641 780
WO-A1-2010/061651          CN-A- 1 769 127**

## Description

The present invention relates to a vehicle that leans into turns. Prior art document EP 1 473 215 A1 discusses a vehicle that leans into turns with a headlight in combination with a lamp attached to the top of a front shield. The prior art document CN 1 769 127 A discloses a vehicle that leans into turns and comprises sub headlight light sources being turned on and controlled in consideration of the lean angle of the vehicle. Said sub headlight light sources are arranged to be integrated within a front cover below the main headlight and in front of a screen or windshield. Prior art document EP 2 641 780 A2 according Article 54(3) EPC discloses a sub headlight unit for use in a vehicle that leans into turns including a sub headlight light source that illuminates an area ahead and outward of the vehicle with respect to a width direction of the vehicle. The sub headlight light source is configured to, when the vehicle is in an upright state, produce an illumination range including a space above a horizontal plane. The sub headlight light source is turned on in accordance with a lean angle of the vehicle. At a time of parking or stopping or at a time of running straight ahead, the sub headlight light source is turned on or caused to flash with the amount of light per unit time being reduced as compared with the amount of light per unit time emitted when the sub headlight light source is turned on in accordance with the lean angle of the vehicle. The vehicle is provided with a screen attached above a main headlight source. The sub headlight light source is disposed in a front cover of the vehicle.

In general, in a vehicle that leans into turns (such as saddle-ride type vehicles including motorcycles, three-wheeled motor vehicles, snowmobiles, and ATVs (all terrain vehicles)), when the vehicle corners or turns at an intersection, a rider operates a handlebar and additionally shifts his/her own weight in order to counteract centrifugal force acting on a vehicle body. Thereby, the vehicle turns with an attitude (hereinafter, also referred to as "lean attitude") leanirig to the inner side of a curve. On the other hand, in a vehicle that does not lean into turns, for example, in an automobile, when the vehicle corners or turns at an intersection, a driver operates a steering wheel and turns with centrifugal force acting on a vehicle body. Therefore, in the vehicle that does not lean into turns, the vehicle body leans to the outer side of a curve due to the centrifugal force.

In the vehicle that leans into turns, the turning is made with an active use of the weight shifting of the rider himself/herself. Therefore, the vehicle body largely leans. In the vehicle that does not lean into turns, the vehicle body leans to the outer side of the curve due to the centrifugal force. The degree of this leaning varies depending on the running speed of the vehicle and the magnitude (radius) of the curve, and this leaning of the vehicle body is not utilized for the turning. In the vehicle that does not lean into turns, it is preferable that the amount of leaning to the outer side of the curve due to the centrifugal force is small.

Thus, at a time of cornering or turning at an intersection, the vehicle that leans into turns causes the vehicle body to lean to the inner side of the curve with a relatively large amount of leaning, while the vehicle that does not lean into turns causes the vehicle body to lean to the outer side of the curve with a relatively small amount of leaning.

Normally, a vehicle is provided with a plurality of lights irrespective of whether or not the vehicle leans into turns. The lights include a light intended mainly to ensure a field of view of a rider of the vehicle and a light intended mainly to enable a surrounding vehicle or the like to recognize the presence of the own vehicle. A headlight is the light intended mainly to ensure the field of view of the rider of the vehicle, and in general, is configured to switch between a high beam (running headlight) and a low beam (passing headlight).

The high beam, which emits light in a horizontal (upward) direction, ensures a field of view at a long distance. Generally, in order to avoid dazzling a rider of a surrounding vehicle or the like, the high beam is used in a situation where there is no vehicle or the like existing ahead at night. The low beam, which emits light in a downward direction, is used even in a situation where there is a vehicle or the like existing ahead. Therefore, in a normal case, a vehicle often runs with the low beam turned on.

When the vehicle that leans into turns is running on a straight road, an illumination range of a headlight light source (low beam) spreads evenly to the right and left in an area ahead in an advancing direction and below a horizontal plane including the headlight light source. When the vehicle that leans into turns is running on a road curving to the left, the vehicle runs with the vehicle body inclined to the left. Accordingly, the illumination range of the headlight light source spreads downward to the left. As a result, a nearer position on a running lane is illuminated. Thus, the illumination range in an area inside the curve and ahead in the advancing direction is reduced.

Therefore, a vehicle has been proposed in which, in addition to a main headlight that illuminates an area ahead of the vehicle, sub headlights configured to be turned on depending on the magnitude of a lean angle (angle of inclination of a vehicle body to the inner side of a curve relative to an upright state thereof) are provided as the headlight and arranged in a front cover (WO 2010/061651). In a vehicle disclosed in WO 2010/061651, the main headlight is arranged at the center of the vehicle, and each of the sub headlights is arranged at each of the right and left sides of the main headlight.

In the vehicle disclosed in WO 2010/061651, the sub headlights are turned on in accordance with an increase in the lean angle. Accordingly, at a time point when a light source is turned on, an illumination range of this light source is additionally provided. This can suppress a reduction in the illumination range which may be caused by inclination of the vehicle.

However, in some cases, in the course of an increase in the lean angle of the vehicle after the sub headlight is turned on, a rider may feel a difficulty in seeing the illumination range of the sub headlight or may feel uncomfortable about a change in the position and brightness of the illumination range of the sub headlight.

Additionally, the rider may feel a difficulty in seeing an area behind an obstacle (such as unevenness on a road surface) within the illumination range produced on the road surface by the sub headlight light source, or may feel uncomfortable.

In the vehicle disclosed in WO 2010/061651, sub headlight light sources are installed in order to compensate an illumination range of a main headlight light source which is reduced along with an increase in the lean angle. Here, similarly to the main headlight light source, the sub headlight light sources are also arranged in a front cover. The height of the sub headlight light source and the height of the main headlight light source are substantially the same. Therefore, when the height of the main headlight light source decreases along with an increase in the lean angle, the height of the sub headlight light source also decreases. Thus, the sub headlight light source is at a relatively low position when it is turned on.

In the vehicle disclosed in WO 2010/061651, each of the sub headlights is arranged at each of the right and left sides of the main headlight. Thus, the sub headlights are positioned relatively outward with respect to a width direction of the vehicle. Therefore, the width of downward movement of the sub headlight light source in accordance with an increase in the lean angle is large.

As a result, the distance between the sub headlight light source and a ground surface in accordance with an increase in the lean angle is readily shortened. Under a state where the distance between the sub headlight light source and the ground surface is short, a change in the illumination range in response to the amount of change in the lean angle is large.

Accordingly, the illumination range of the sub headlight produced on the road surface and a cut-off line of the sub headlight approach to the vehicle at an increased speed. This increases the speed of reduction in the illumination range, and also increases the speed of change in the intensity of reflected light from the road surface. As a result, a situation occurs where the rider feels a difficulty in seeing the illumination range of the sub headlight or feels uncomfortable about a change in the position and brightness of the illumination range of the sub headlight. Moreover, since the sub headlight light source is at a relatively low position when it is turned on, an area of the road surface behind an obstacle existing on the road surface (such as unevenness on the road surface) is shadowed by the obstacle when seen from the rider. This consequently causes the rider to feel a difficulty in seeing the area behind the obstacle or feel uncomfortable.

It is an object of the present invention to provide a vehicle that leans into turns which suppress occurrence of a situation where a rider feels uncomfortable about a change in an illumination range in the course of an increase or decrease in the lean angle of a vehicle body.

According to the present invention said object is solved by a a vehicle that leans into turns having the features of independent claim 1. Preferred embodiments are laid down in the dependent claims.

Accordingly, it is provided:

(1) A sub headlight unit for use in a vehicle that leans into turns,
the vehicle including a main headlight light source and a screen having transparency, the main headlight light source being arranged in a vehicle body cover, the screen being fixed to the vehicle body cover and arranged above the main headlight light source,
the sub headlight unit including a sub headlight light source, the sub headlight unit being arranged outside the vehicle body cover, at least part of the sub headlight unit being arranged rearward of the screen,
the sub headlight light source being configured to be turned on in accordance with a lean angle of the vehicle and to illuminate, from a position higher than the main headlight light source, an area ahead and outward of the vehicle with respect to a width direction of the vehicle.

In a configuration of (1), the sub headlight unit is arranged outside the vehicle body cover, and at least part of the sub headlight unit is arranged rearward of the screen. This allows the sub headlight light source to be located at the center side of the vehicle with respect to the width direction of the vehicle and to produce illumination from a position higher than the main headlight light source. Thus, a change in the illumination range in response to the amount of change in the lean angle can be suppressed. This can reduce the speed at which the illumination range of the sub headlight produced on a road surface and a cut-off line of the sub headlight approach to the vehicle. Along with this, the speed of reduction in the illumination range can be reduced, and the speed of change in the intensity of reflected light from the road surface can be reduced. As a result, occurrence of a situation where a rider feels a difficulty in seeing the illumination range of the sub headlight or feels uncomfortable about a change in the position and brightness of the illumination range of the sub headlight can be suppressed. Additionally, the sub headlight light source is at a relatively high position when it is turned on. Accordingly, an area of the road surface behind an obstacle existing on the road surface (such as unevenness on the road surface) is easier to see from the rider. Thus, occurrence of a situation where the rider feels uncomfortable can be suppressed. Furthermore, since the sub headlight unit is arranged outside the vehicle body cover, a heat dissipation effect due to headwind can be exerted, which results in a less influence of heat generation in the main headlight light source arranged in the vehicle body cover. Therefore, a size increase in a heat dissipation mechanism can be suppressed. As a result, a size increase in the sub headlight unit can be suppressed.

In this manner, the configuration of (1) can suppress occurrence of a situation where the rider feels uncomfortable about a change in the illumination range in the course of an increase or decrease in the lean angle of the vehicle body, and also can suppress a size increase in the sub headlight unit.

Normally, in a vehicle that leans into turns, a headlight is arranged in a vehicle body cover, and a lens of the headlight and the vehicle body cover are visible when seen from the front side of the vehicle, and additionally a heat dissipation mechanism of the headlight is arranged inside the vehicle body cover. This is an ordinary manner of arrangement of the headlight. Since a screen receives headwind, a screen extending upward is likely to receive a high air resistance. However, it is difficult to lower the height of the lower end of the screen, because the main headlight is arranged in the vehicle body cover. Thus, there is a limitation on the vertical length of the screen, and it is difficult to provide a large light to the screen. Therefore, even those skilled in the art are unlikely to conceive of the idea that a headlight is provided to a screen.

In this respect, the present inventors have focused on the fact that, although the sub headlight is a light intended mainly to ensure a field of view of the rider and has a high output similarly to the main headlight, the sub headlight is turned on in accordance with the lean angle and therefore a time period during which the sub headlight is continuously turned on is short, so that the amount of heat generation in the sub headlight does not become large. Since the amount of heat generation does not become large, a heat dissipation mechanism can be downsized. As a result, the sub headlight itself can be downsized. This makes it possible to achieve such an arrangement of the sub headlight unit that part of the sub headlight unit is located rearward of the screen.

(2) The sub headlight unit according to (1), wherein

the sub headlight unit is integrated with the screen, and arranged outside the vehicle body cover.

In a configuration of (2), the sub headlight unit can be readily provided. Additionally, a space reduction within the vehicle body cover due to the sub headlight unit can be avoided. Therefore, it is easy to handle the sub headlight unit as an optional unit. Moreover, since the sub headlight unit is arranged outside the vehicle body cover in which the main headlight light source is arranged, an influence of heat generation in the main headlight light source can be suppressed. Thus, a heat dissipation mechanism of the sub headlight unit can be downsized, and consequently the sub headlight unit itself can be downsized.

(3) The sub headlight unit according to (1), wherein

the sub headlight unit is a member separate from the screen, and arranged outside the vehicle body cover.

In a configuration of (3), the sub headlight unit can be readily provided. Additionally, a space reduction within the vehicle body cover due to the sub headlight unit can be avoided. Therefore, it is easy to handle the sub headlight unit as an optional unit. Moreover, since the sub headlight unit is arranged outside the vehicle body cover in which the main headlight light source is arranged, an influence of heat generation in the main headlight light source can be suppressed. Thus, a heat dissipation mechanism of the sub headlight unit can be downsized, and consequently the sub headlight unit itself can be downsized.

(4) The sub headlight unit according to any one of (1) to (3), wherein

the vehicle has a ventilation path provided outside the vehicle body cover, the ventilation path allowing headwind to pass therethrough from the front side of the screen to the rear side of the screen,

at least part of the sub headlight unit is arranged rearward of the screen, and exposed in the ventilation path at a location outside the vehicle body cover.

In a configuration of (4), the sub headlight unit is in contact with the headwind at a location outside the vehicle body cover. Therefore, a higher heat dissipation effect can be exerted. This can further downsize the heat dissipation mechanism, and thus causes less interruption to a field of view of the rider.

(5) The sub headlight unit according to (4), wherein

the sub headlight unit includes a lens and a heat dissipation mechanism, the lens allowing light emitted from the sub headlight light source to pass therethrough, the heat dissipation mechanism being configured to dissipate heat from the sub headlight light source,

the part of the sub headlight unit exposed in the ventilation path is the lens or the heat dissipation mechanism.

In a configuration of (5), the lens or the heat dissipation mechanism is exposed in the ventilation path. Therefore, a further higher heat dissipation effect can be exerted. This can further downsize the heat dissipation mechanism, and thus causes still less interruption to a field of view of the rider.

(6) The sub headlight unit according to (4) or (5), wherein

the ventilation path is formed to extend upward and rearward from an opening of the ventilation path which is provided at a front end thereof,

the part of the sub headlight unit exposed in the ventilation path is located above a lower end of the opening.

A configuration of (6) can suppress entry of rainwater, muddy water, and the like, which may otherwise enter the rear side of the vehicle from the opening of the ventilation path, and also can suppress wetting of the part of the sub headlight unit exposed in the ventilation path due to rainwater, muddy water, and the like.

(7) A screen unit for use in a vehicle that leans into turns,
the screen unit including:

> a screen having transparency provided to the vehicle body cover; and
> the sub headlight unit according to any one of (1) to (6).

A configuration of (7) enables the sub headlight light source to illuminate, from a high position, an area ahead and outward with respect to the width direction of the vehicle. Accordingly, occurrence of a situation where the rider feels uncomfortable about a change in the illumination range can be suppressed in the course of an increase or decrease in the lean angle of the vehicle body.

(8) A sub headlight system for use in a vehicle that leans into turns,
the sub headlight system including:

> the sub headlight unit according to any one of (1) to (6);
> a detection part that detects a variable available for obtaining the lean angle of the vehicle; and
> a control part that turns on the plurality of sub headlight light sources in accordance with the lean angle of the vehicle obtained based on a result of detection by the detection part.

A configuration of (8) enables the sub headlight light source to illuminate, from a high position, an area ahead and outward with respect to the width direction of the vehicle. Accordingly, occurrence of a situation where the rider feels uncomfortable about a change in the illumination range can be suppressed in the course of an increase or decrease in the lean angle of the vehicle body.

(9) A vehicle that leans into turns,
the vehicle including the system according to (8).

A configuration of (9) enables the sub headlight light source to illuminate, from a high position, an area ahead and outward with respect to the width direction of the vehicle. Accordingly, occurrence of a situation where the rider feels uncomfortable about a change in the illumination range can be suppressed in the course of an increase or decrease in the lean angle of the vehicle body.

These and other objects, features, aspects and advantages of the present invention will become apparent to those skilled in the art from the following detailed description, which, taken in conjunction with the accompanying drawings, discloses some embodiments of the present invention.

[EFFECTS OF THE INVENTION]

The present invention achieves suppression of occurrence of a situation where a rider feels uncomfortable about a change in an illumination range in the course of an increase or decrease in the lean angle of a vehicle body.

[BRIEF DESCRIPTION OF THE DRAWINGS]

[FIG. 1] A front elevational view schematically showing a motorcycle according to a first embodiment of the present teaching.
[FIG. 2] A left side view schematically showing the motorcycle shown in FIG. 1.
[FIG. 3] A block diagram showing a basic configuration concerning sub headlight units of the motorcycle shown in FIG. 1.
[FIG. 4] (a) is a front elevational view schematically showing optical axes and cut-off lines of sub headlight light sources of the motorcycle in an upright state; and (b) is a front elevational view schematically showing the optical axes and the cut-off lines of the sub headlight light sources of the motorcycle with a lean attitude.
[FIG. 5] A front elevational view schematically showing, on an enlarged scale, a part of the motorcycle shown in FIG. 1.
[FIG. 6] A left side view schematically showing, on an enlarged scale, a part of the motorcycle shown in FIG. 1.

[FIG. 7] A cross-sectional view showing an enlarged version of FIG. 6.

[FIG. 8] A vertical cross-sectional view schematically showing, on an enlarged scale, a part around a sub headlight unit of a motorcycle according to a second embodiment of the present teaching.

[EMBODIMENTS FOR CARRYING OUT THE INVENTION]

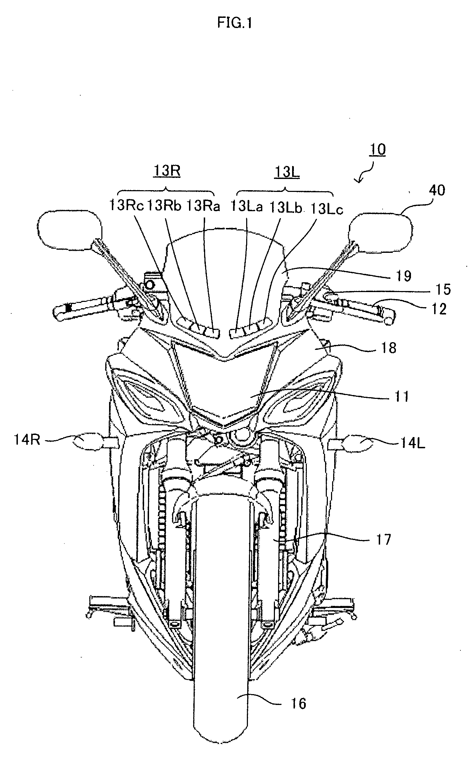

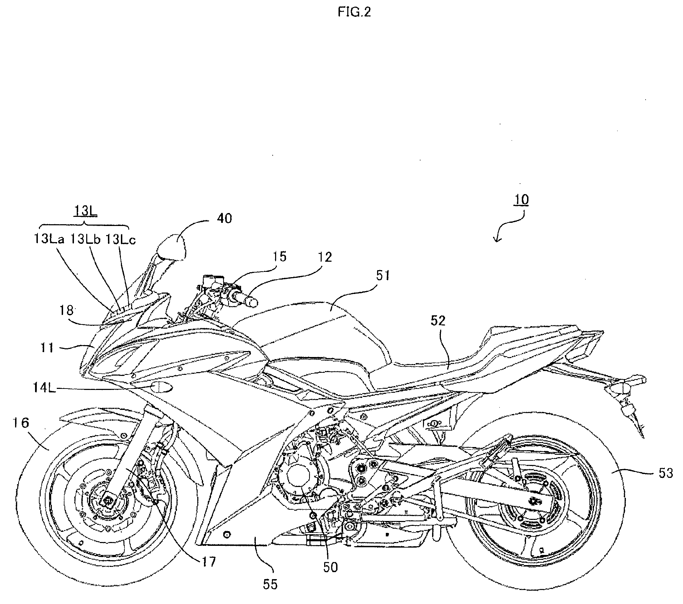

FIG. 1 is a front elevational view schematically showing a motorcycle according to a first embodiment of the present teaching, and FIG. 2 is a left side view thereof.

A motorcycle 10 is an example of a vehicle that leans into turns according to the present teaching. According to the present teaching, no particular limitation is put on the vehicle that leans into turns. For example, saddle-ride type vehicles including motorcycles, three-wheeled motor vehicles, snowmobiles, and ATVs (all terrain vehicles) may be mentioned. In the following description, the terms "front" and "back" are terms with respect to an advancing direction of the vehicle, the terms "up" and "down" are terms with respect to the vertical direction of the vehicle, and the terms "right" and "left" are terms with respect to a rider.

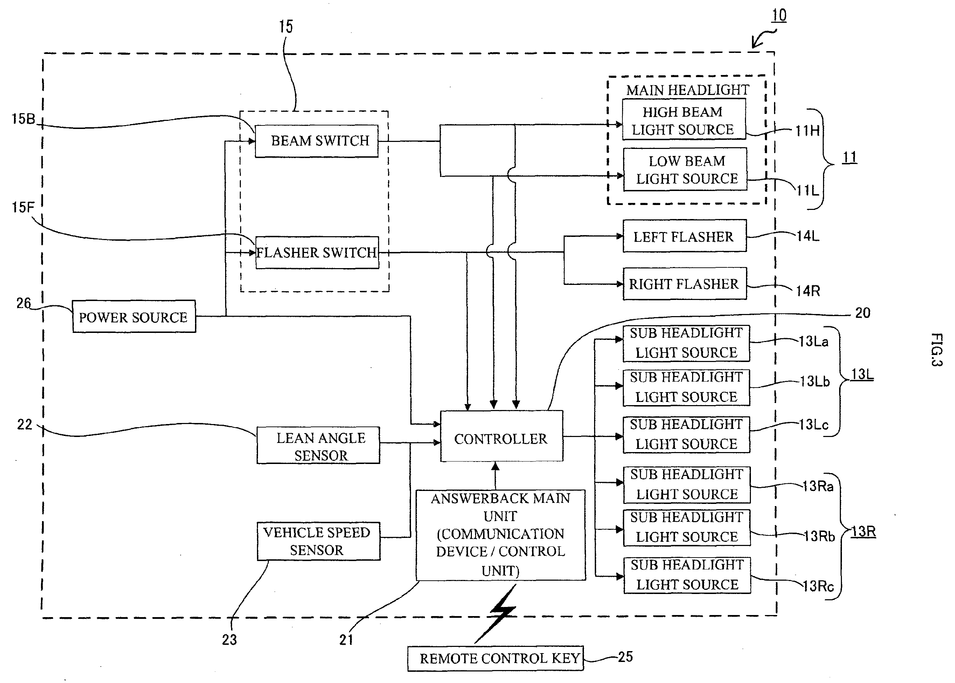

The motorcycle 10 includes a handlebar 12. An operation switch 15 is provided in a left portion of the handlebar 12 with respect to a width direction of the vehicle. The operation switch 15 includes a beam switch 15B and a flasher switch 15F (see FIG. 3). A steering shaft (not shown) is fixed to a center portion of the handlebar 12 with respect to the width direction of the vehicle. The steering shaft extends downward through a headpipe (not shown). A frontfork 17 is provided at a lower end of the steering shaft. A front wheel 16 is rotatably supported at the lower end of the frontfork 17. The headpipe is a member constituting a vehicle body frame. According to the present teaching, no particular limitation is put on the vehicle body frame, and a conventionally known configuration is adoptable.

A front cover 18 covers a front part of the headpipe having the steering shaft passing therethrough. On the front surface of the front cover 18, a main headlight 11 is provided in a central portion with respect to the width direction of the vehicle. The main headlight 11 includes, as a main headlight light source, a high beam light source 11H (running headlight) and a low beam light source 11 L (passing headlight), though not shown in FIG. 1. The high beam light source 11 H illuminates an area ahead in front of the motorcycle 10 at a height equal to or above a horizontal plane of the main headlight 11. The low beam light source 11 L illuminates an area ahead in front of the motorcycle 10 at a height below the horizontal plane of the main headlight 11.

Flashers 14L and 14R, serving as direction indicators, are provided at both sides of the motorcycle 10 with respect to the width direction of the vehicle.

A screen 19 having transparency is provided above the front cover 18 in a central portion with respect to the width direction of the vehicle. The screen 19 is arranged above the high beam light source 11 H and the low beam light source 11 L that serve as the main headlight light source. The screen 19 is fixed to the front cover 18. The screen 19 is inclined upward and rearward. The screen 19 is arranged at the front side of the handlebar 12.

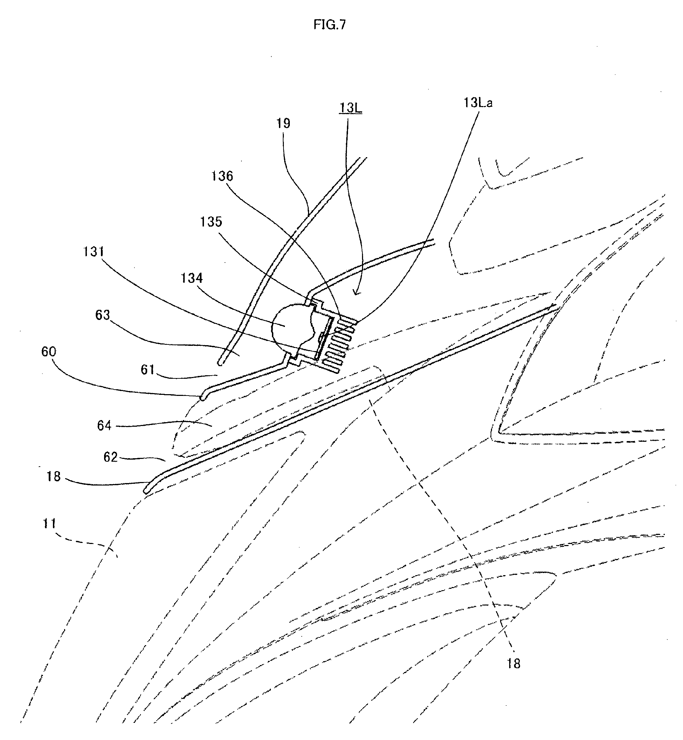

Two sub headlight units 13L and 13R of variable light distribution type are provided above the lower end of the screen 19 when seen from the front side of the motorcycle 10. The sub headlight units 13L and 13R are arranged outside the front cover 18. The sub headlight units 13L and 13R are positioned such that they are visible from the front side of the motorcycle 10. The sub headlight units 13L and 13R are arranged inner than the outer peripheral edge of the screen 19 when seen from the front side of the motorcycle 10. Each of the sub headlight units 13L and 13R is provided at each of the right and left sides with respect to the width direction of the vehicle. At least part of the sub headlight units 13L and 13R is arranged rearward of the screen 19 (see FIG. 7).

The sub headlight unit 13L includes a plurality of sub headlight light sources 13La, 13Lb, and 13Lc. The sub headlight light sources 13La, 13Lb, and 13Lc are arranged in this order from the center toward the upper left with respect to the width direction of the vehicle. The sub headlight light sources 13La, 13Lb, and 13Lc illuminate an area ahead and left-lateral with respect to the width direction of the vehicle. Illumination ranges of the sub headlight light sources 13La, 13Lb, and 13Lc are arranged in this order from the center toward the upper left. The illumination ranges overlap one another.

The sub headlight unit 13R includes a plurality of sub headlight light sources 13Ra, 13Rb, and 13Rc. The sub headlight light sources 13Ra, 13Rb, and 13Rc are arranged in this order from the center toward the upper right with respect to the width direction of the vehicle. The sub headlight light sources 13Ra, 13Rb, and 13Rc illuminate an area ahead and right-lateral with respect to the width direction of the vehicle. Illumination ranges of the sub headlight light sources 13Ra, 13Rb, and 13Rc are arranged in this order from the center toward the upper right with respect to the width direction of the vehicle. The illumination ranges overlap one another.

Optical axes of the sub headlight light sources 13La to 13Lc, 13Ra to 13Rc are fixed, and not moved in accordance with a lean angle. A reflector (not shown) of the sub headlight light source is also fixed, and not moved in accordance with the lean angle. In this embodiment, no particular limitation is put on the sub headlight light source. For example, an LED is adoptable. A mono-focus type light source is also adoptable as the sub headlight light source. As for how the sub headlight light sources 13La to 13Lc, 13Ra to 13Rc are arranged in the motorcycle 10, the above-described arrangement manner is merely an illustrative example of the present teaching. The present teaching is not limited to this example.

Rearview mirrors 40 are provided above the front cover 18 and at both right and left sides of the screen 19. As shown in FIG. 2, a fuel tank 51 is provided rearward of the handlebar 12. A seat 52 is provided rearward of the fuel tank 51. An engine 50 is provided below the fuel tank 51. An under cover 55 is provided at a lateral side of the engine 50. A rear wheel 53 is provided rearward of the engine 50. The motorcycle 10 according to this embodiment adopts a conventionally known configuration except for the screen 19 which will be described later.

FIG. 3 is a block diagram showing a basic configuration concerning the sub headlight light sources 13La to 13Lc, 13Ra to 13Rc of the motorcycle 10 shown in FIG. 1.

The operation switch 15 includes the beam switch 15B and the flasher switch 15F. The beam switch 15B is connected to the high beam light source 11 H and the low beam light source 11 L included in the main headlight 11. When the rider operates the beam switch 15B, turn-on/turn-off of the high beam light source 11 H and the low beam light source 11 L is switched in accordance with the operation performed on the beam switch 15B.

The flasher switch 15F is connected to the flashers 14L and 14R. When the rider operates the flasher switch 15F, one of the flashers 14L and 14R is caused to flash in accordance with the operation performed on the flasher switch 15F.

In the motorcycle 10, a lean angle sensor 22 and a vehicle speed sensor 23 are provided. In this embodiment, the lean angle sensor 22 is a gyro sensor that detects the angular velocity about the front-back axis of the motorcycle 10. The lean angle sensor 22 supplies, to a controller 20, a signal indicating the detected angular velocity (roll rate) about the front-back axis. The vehicle speed sensor 23 detects the vehicle speed, and supplies, to the controller 20, a signal indicating the detected vehicle speed. Each time a predetermined timing comes during running, the controller 20 calculates the lean angle of the motorcycle 10 based on the angular velocity about the front-back axis and the vehicle speed.

In this embodiment, the roll rate is integrated over time, and the vehicle speed is used as correction information, thereby calculating the lean angle. However, according to the present teaching, a method for calculating the lean angle is not limited to this example. In the calculation of the lean angle, the vehicle speed is not an essential variable. For calculating the lean angle, a conventionally known method is adoptable. For example, the calculation may be performed based on a static equilibrium equation by using the yaw rate (angular velocity about the vertical axis) and the vehicle speed. The correction information is not limited to the vehicle speed. For example, it may be acceptable to provide a plurality of gyro sensors and G sensors and use values obtained from these sensors and the vehicle speed as the correction information. Instead of the vehicle speed, GPS position information and/or geomagnetic information may be used as the correction information. No particular limitation is put on sensors (detection part) for detecting variables that are available for obtaining the lean angle. An appropriate sensor may be provided in accordance with variables available for the calculation.

The controller 20 includes a memory (not shown). The memory stores, in the form of data, a plurality of reference values (°) to be compared with the lean angle. In this embodiment, the memory stores three reference values. The reference values are different from one another, and associated with the sub headlight light sources 13La, 13Lb, and 13Lc, respectively. The reference value increases in the order of the reference values associated with the sub headlight light sources 13La, 13Lb, and 13Lc.

When the lean angle of the motorcycle 10 leaning to the left is equal to or larger than the reference value, the controller 20 turns on the sub headlight light source having this reference value associated therewith among the sub headlight light sources 13La to 13Lc arranged at the same side as the side to which the motorcycle 10 is leaning. On the other hand, when the lean angle is less than the reference value, the controller 20 turns off the sub headlight light source. The reference value increases in the order of the reference values associated with the sub headlight light sources 13La, 13Lb, and 13Lc. Therefore, in the course of an increase in the lean angle, the sub headlight light sources 13La, 13Lb, and 13Lc are turned on in this order. In the course of a decrease in the lean angle, the sub headlight light sources 13Lc, 13Lb, and 13La are turned off in this order.

The sub headlight light sources 13Ra, 13Rb, and 13Rc also have reference values associated therewith, similarly to the sub headlight light sources 13La, 13Lb, and 13Lc.

The sub headlight light sources 13La to 13Lc, 13Ra to 13Rc are connected to the controller 20. A power source 26 is connected to the high beam light source 11 H and the low beam light source 11 L via the beam switch 15B. The power source 26 is connected to the flashers 14L and 14R via the flasher switch 15F. The power source 26 is connected to the controller 20. An answerback main unit 21 is connected to the controller 20. The answerback main unit 21 receives a signal radio wave from a remote control key 25.

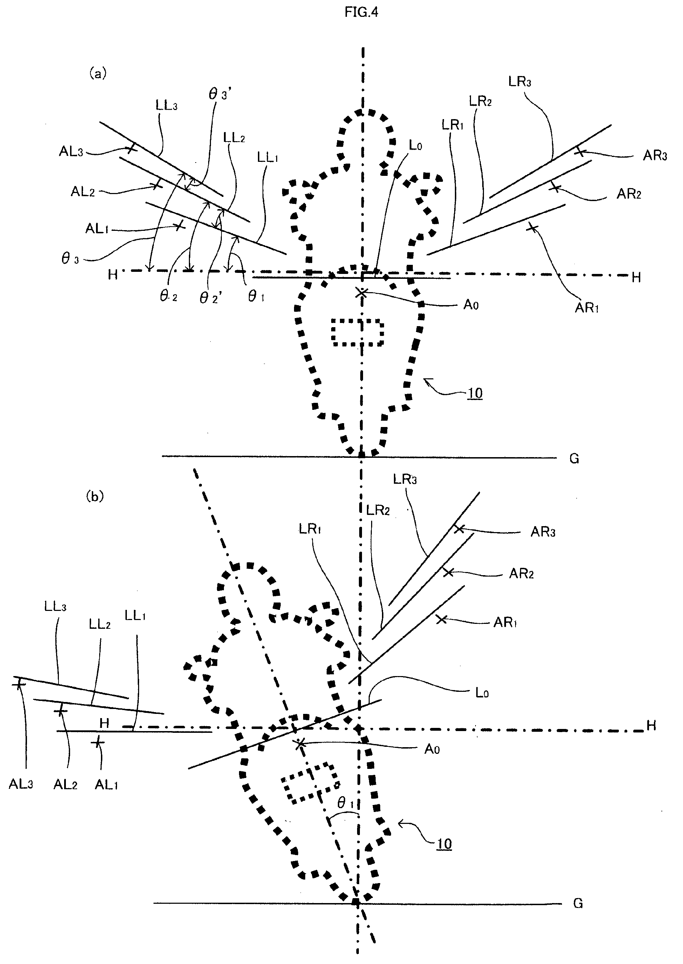

FIG. 4(a) is a front elevational view schematically showing optical axes and cut-off lines of the sub headlight light sources 13La to 13Lc, 13Ra to 13Rc of the motorcycle 10 in the upright state. FIG. 4(b) is a front elevational view schematically showing the optical axes and the cut-off lines of the sub headlight light sources 13La to 13Lc, 13Ra to 13Rc of the motorcycle 10 with a lean attitude.

As shown in FIG. 4(a), the motorcycle 10 stands upright on a flat ground G. An optical axis $A_0$ of the low beam light source 11 L is located below a horizontal line H of the low beam light source 11 L. A cut-off line $L_0$ of the low beam light source 11 L is located above the optical axis $A_0$, and located below the horizontal line H of the low beam light source 11 L. The cut-off line $L_0$ extends right and left along the width direction of the vehicle. An illumination range of the low beam light source 11 L covers both right and left sides with respect to the width direction of the vehicle.

The optical axes $AL_1$ to $AL_3$ of the sub headlight light sources 13La to 13Lc are located outward in the order of the optical axes $AL_1$ to $AL_3$ with respect to the width direction of the vehicle. The optical axes $AL_1$ to $AL_3$ of the sub headlight light sources 13La to 13Lc are located above the optical axis $A_0$ of the low beam light source 11 L.

Inclination angles $\theta_1$ to $\theta_3$ of cut-off lines $LL_1$ to $LL_3$ of the sub headlight light sources 13La to 13Lc increase in the order of the inclination angles $\theta_1$ to $\theta_3$.

The inclination angles $\theta_1$ to $\theta_3$ of the cut-off lines $LL_1$ to $LL_3$ of the sub headlight light sources 13La to 13Lc are set to be values increasing at intervals from 0° to $\theta_1$, $\theta_2$, and $\theta_3$ in this order. The interval between 0° and $\theta_1$ is $\theta_1$. When the interval between $\theta_2$ and $\theta_1$ is defined as $\theta_2'$ and the interval between $\theta_3$ and $\theta_2$ is defined as $\theta_3'$, the intervals $\theta_1$, $\theta_2'$, and $\theta_3'$ satisfy $\theta_1 > \theta_2' > \theta_3'$. In other words, a larger inclination angle ($\theta_1$ to $\theta_3$) has a smaller interval ($\theta_1$, $\theta_2'$, $\theta_3'$). Here, according to the present teaching, the intervals are not limited to the above-mentioned one. For example, the intervals may be regular intervals.

In this embodiment, the reference values (°) for turning on the sub headlight light sources 13La, 13Lb, and 13Lc are set to be $\theta_1$, $\theta_2$, and $\theta_3$, respectively. Accordingly, when the motorcycle 10 is running in the upright state ($\theta=0$), the sub headlight light sources 13La to 13Lc, 13Ra to 13Rc are not turned on. As shown in FIG. 4(b), when the motorcycle 10 is inclined to one side (to the left in FIG. 4) with respect to the width direction of the vehicle so that the lean angle reaches $\theta_1$, it means that the lean angle of the motorcycle 10 reaches the reference value. Therefore, the sub headlight light source 13La arranged at the same side (left side) as the side to which the motorcycle 10 is leaning is turned on. At this time, the cut-off line $LL_1$ is horizontal. Then, when the lean angle reaches $\theta_2$ along with an increase in the lean angle, the sub headlight light source 13Lb is turned on, with the cut-off line $LL_2$ being horizontal at this time. Then, when the lean angle reaches $\theta_3$ along with an increase in the lean angle, the sub headlight light source 13Lc is turned on, with the cut-off line $LL_3$ being horizontal at this time.

The relationship between the inclination angle ($\theta_1$ to $\theta_3$) of the cut-off line ($LL_1$ to $LL_3$) of each sub headlight light source (13La to 13Lc) and the reference value set for this sub headlight light source (13La to 13Lc) is not limited to this example. These values (angles) may be different from each other. Here, a state where these values are the same encompasses a state where these values are substantially the same.

The cut-off lines $LL_1$ to $LL_3$ of the sub headlight light sources 13La to 13Lc define the upper end edges of the illumination ranges of the sub headlight light sources 13La to 13Lc, respectively, and therefore the illumination ranges of the sub headlight light sources 13La to 13Lc are located below the cut-off lines $LL_1$ to $LL_3$ of the sub headlight light sources 13La to 13Lc, though not shown in FIG. 4. Accordingly, each of the illumination ranges of the sub headlight light sources 13La to 13Lc contains a space above the horizontal line H, and their locations are higher in ascending order of the illumination range of the sub headlight light source 13La, the illumination range of the sub headlight light source 13Lb, and the illumination range of the sub headlight light source 13Lc. The illumination ranges of the sub headlight light sources 13La to 13Lc are located at the left side with respect to the width direction of the vehicle.

Except for whether the sub headlight light sources are provided at the right side or the left side of the symmetry, the sub headlight light sources 13Ra to 13Rc are identical to the sub headlight light sources 13La to 13Lc described above. Therefore, a description thereof will be omitted.

Here, according to the present teaching, the optical axis is a straight line that passes through a light source and the center of a maximum illuminance portion of emitted light. The center of the maximum illuminance portion of the emitted light can be identified by emitting light from a light source to a screen that is placed ahead of the light source. This screen illuminance test can be implemented by a method specified in JIS D1619. Also, the cut-off line and the illumination range having the predetermined illuminance can be identified based on a result (such as an isolux distribution map) of the screen illuminance test mentioned above. The cut-off line and the illumination range having the predetermined illuminance in a plan view can be identified based on a road-surface light distribution that is obtained by converting the result of the screen illuminance test mentioned above into the road-surface light distribution. The conversion into the road-surface light distribution can be implemented by a conventionally known method. To be specific, through commonly-used drawing and geometric calculation, conversion from a screen illuminance value into a road-surface illuminance value can be performed. In such a case, the following expression (I) is usable. In the following expression (I), D represents a light source, E represents a point on a road surface, and F represents a point of intersection at which the screen placed between D and E intersects with a straight line connecting D to E.

$$\text{Road-Surface Illuminance (Lx)} = \text{Screen Illuminance (Lx)} \times [(\text{Distance between D and F (m)}) / (\text{Distance between D and E (m)})]^2 \qquad \dots \text{(I)}$$

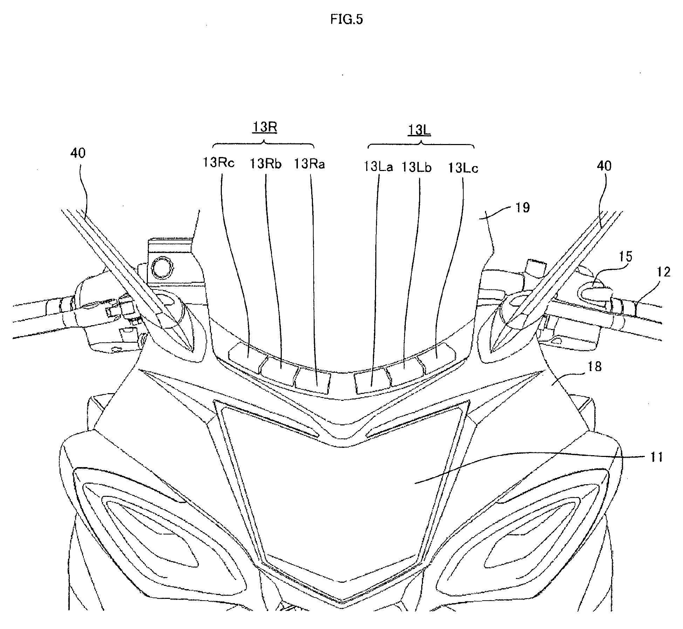

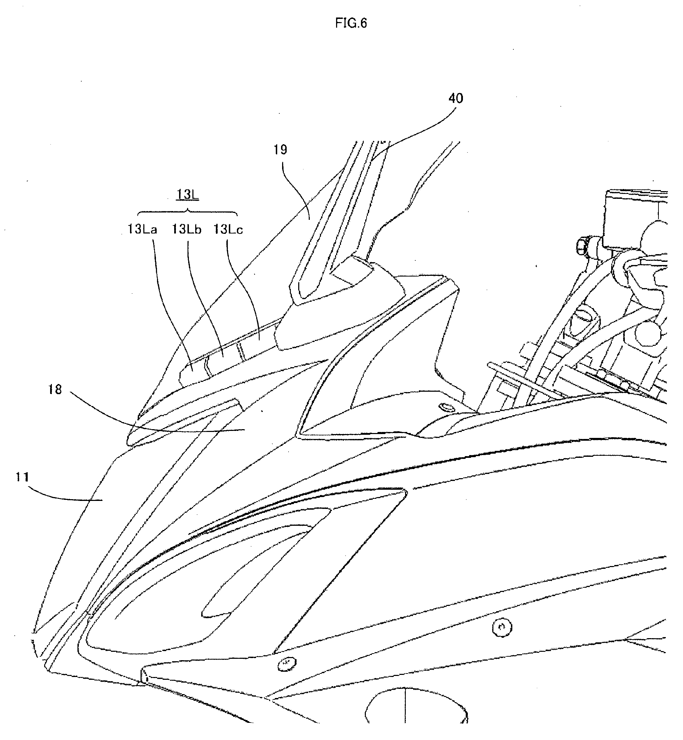

FIG. 5 is a front elevational view schematically showing, on an enlarged scale, a part of the motorcycle 10 shown in FIG. 1. FIG. 6 is a left side view schematically showing, on an enlarged scale, a part of the motorcycle 10 shown in FIG. 1. FIG. 7 is a cross-sectional view showing an enlarged version of FIG. 6. FIG. 7 illustrates only the sub headlight light source 13La among the sub headlight light sources 13La to 13Lc included in the sub headlight unit 13L. The broken lines in FIG. 7 indicate configurations that are visible in the side view of FIG. 6.

As shown in FIG. 5, the screen 19 having transparency is provided above the front cover 18 and at the outer side of the front cover 18. More specifically, the screen 19 is fixed to the front cover 18 with a fixture (not shown) such as a bolt. The rearview mirrors 40 are provided at both right and left sides above the front cover 18. The screen 19 is positioned between the right and left rearview mirrors 40 with respect to the width direction of the vehicle. The screen 19 is arranged above the main headlight 11 (the high beam 11 H and the low beam 11 L). The screen 19 is arranged frontward of the handlebar 12.

The sub headlight units 13L and 13R are members separate from the screen 19, which are arranged outside the front cover 18 and arranged rearward of the screen 19 (see FIG. 7). When seen from the front side of the motorcycle 10, the sub headlight units 13L and 13R are visible through the screen 19 (see FIGS. 5 and 6). The sub headlight units 13L and 13R are arranged above the lower end of the screen 19 when seen from the front side of the motorcycle 10.

As shown in FIG. 5, when seen from the front side of the motorcycle 10, the sub headlight light sources 13La to 13Lc are arranged in this order from the lower and inner side toward the upper and outer side with respect to the width direction of the vehicle. As shown in FIG. 6, when seen from a lateral side of the motorcycle 10, the sub headlight light sources 13La to 13Lc are arranged in this order from the lower and front side toward the upper and rear side. The screen 19 extends upward and rearward as shown in FIG. 6. Headwind coming from the front side flows upward and rearward along the screen 19. This can relieve an influence of the headwind on the rider.

As shown in FIG. 7, the sub headlight unit 13L is a member separate from the screen 19, and provided to a top cover 60 that is arranged above and outside the front cover 18. The sub headlight unit 13L includes a substrate 131 on which the sub headlight light sources 13La to 13Lc (LEDs) are mounted, a casing 135 that accommodates the substrate 131 having the sub headlight light sources 13La to 13Lc mounted thereon, lenses 134 each corresponding to each of the sub headlight light sources 13La to 13Lc, and a heat dissipation fin 136 that is shared among the sub headlight light sources 13La to 13Lc. The heat dissipation fin 136 is an example of a heat dissipation mechanism. The heat dissipation mechanism of the present teaching is not limited to this example. Light emitted from each of the sub headlight light sources 13La to 13Lc passes through the lens 134, and then through the screen 19, and then is emitted frontward.

The top cover 60 is arranged below the screen 19. An opening 61 is provided between a front end portion of the screen 19 and a front end portion of the top cover 60. The top cover 60 and the screen 19 define a ventilation path 63 between the top cover 60 and the screen 19. Headwind having flowed in from the opening 61 passes through the ventilation path 63. The ventilation path 63 is arranged outside the front cover 18. In the ventilation path 63, the lenses 134 are exposed. Accordingly, the headwind passing through the ventilation path 63 cools the sub headlight unit 13L. The ventilation path 63 is formed to extend upward and rearward from the opening 61. The lenses 134 are arranged above the lower end of the opening 61. This can suppress entry of rainwater, muddy water, and the like, through the opening 61, and also can suppress wetting of the lenses 134 due to rainwater, muddy water, and the like.

The top cover 60 is arranged above the front cover 18. An opening 62 is provided between the front end portion of the front cover 18 and the front end of the top cover 60. The top cover 60 and the front cover 18 define a ventilation path 64 between the top cover 60 and the front cover 18. Headwind having flowed in from the opening 62 passes through the ventilation path 64. The ventilation path 64 is arranged outside the front cover 18. In the ventilation path 64, the heat dissipation fin 136 is exposed. In he ventilation path 64, the casing 135 is also exposed. Accordingly, the headwind passing through the ventilation path 64 cools the sub headlight unit 13L. The ventilation path 64 is formed to extend upward and rearward from the opening 62. The heat dissipation fin 136 and the casing 135 are arranged above the lower end of the opening 62. This can suppress entry of rainwater, muddy water, and the like, through the opening 62, and also can suppress wetting of the heat dissipation fin 136 and the casing 135 due to rainwater, muddy water, and the like.

Moreover, in the ventilation path 64, a part (the heat dissipation fin 136 and the casing 135) of the sub headlight 13La exposed in the ventilation path 64 is arranged in an upper one (top cover 60) of the members (the top cover 60 and the front cover 18) that define the ventilation path 64. This can suppress wetting due to rainwater, muddy water, and the like.

In this embodiment, it may be acceptable that the sub headlight units 13L and 13R are provided as an optional extra (also referred to as an accessory or a custom part) to the motorcycle 10. In such a case, the top cover 60 including the sub headlight units 13L and 13R is installed instead of a top cover not including the sub headlight units 13L and 13R.

As thus far described, in the motorcycle 10, the sub headlight light sources 13La to 13Lc, 13Ra to 13Rc are positioned rearward of the screen 19 such that they are visible through the screen 19 when seen from the front side. The sub headlight light sources 13La to 13Lc, 13Ra to 13Rc are able to produce illumination from positions higher than the main headlight light source (the high beam light source 11H and the low beam light source 11 L). This can suppress occurrence of a situation where the rider feels uncomfortable about a change in the illumination range in the course of an increase or decrease in the lean angle of a vehicle body.

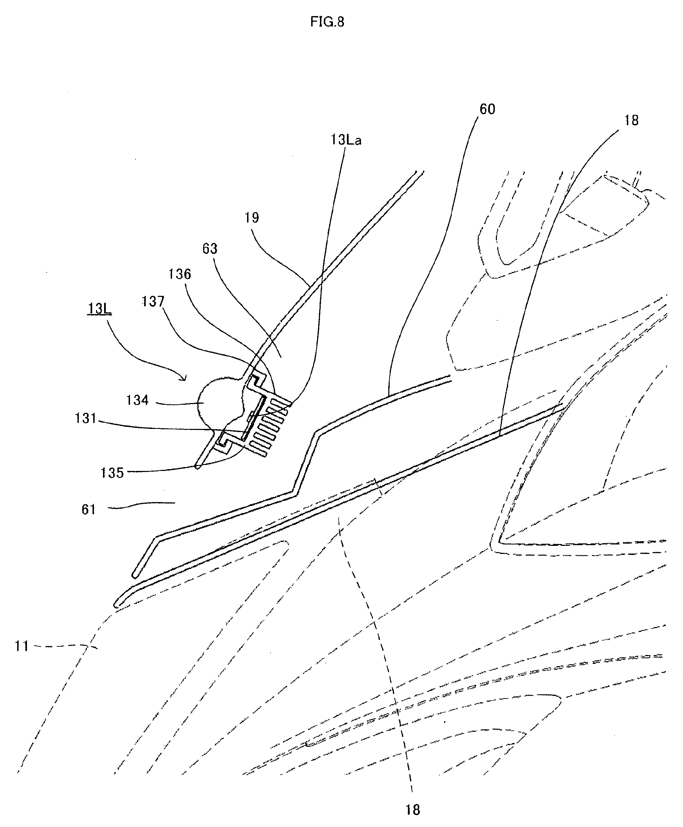

FIG. 8 is a front elevational view schematically showing a motorcycle according to a second embodiment of the present teaching. In FIG. 8, configurations equivalent to the configurations of the first embodiment are given the same reference signs.

In FIG. 8, the lenses 134 are formed integrally with the screen 19, and constitute a part of the screen 19. The lenses 134 are arranged below the screen 19. The casing 135 is fixed to the rear side of the lens 134 with a fixture 137. The casing 135 has the heat dissipation fin 136. The casing 135 accommodates the substrate 131 on which the sub headlight light sources 13La to 13Lc are mounted. Light emitted from the sub headlight light source 13La passes through the lens 134, and is emitted frontward. In this manner, in the second embodiment, the sub headlight unit 13L is provided to the screen 19 and integrated with the screen 19. The screen 19 shown in FIG. 8 extends upward and rearward.

The top cover 60 is arranged below the screen 19. An opening 61 is provided between a front end portion of the screen 19 and a front end portion of the top cover 60. The top cover 60 and the screen 19 define a ventilation path 63 between the top cover 60 and the screen 19. Headwind having flowed in from the opening 61 passes through the ventilation path 63. The ventilation path 63 is arranged outside the front cover 18. In the ventilation path 63, the heat dissipation fin 136 and the casing 135 are exposed. Accordingly, the headwind passing through the ventilation path 63 cools the sub headlight unit 13L. The ventilation path 63 is located above the lower end of the opening 61. This can suppress entry of rainwater, muddy water, and the like, through the opening 61, and also can suppress wetting of the heat dissipation fin 136 and the casing 135 due to rainwater, muddy water, and the like.

Moreover, in the ventilation path 63, a part (the heat dissipation fin 136 and the casing 135) of the sub headlight 13La exposed in the ventilation path 63 is arranged in an upper one (screen 19) of the members (the screen 19 and the top cover 60) that define the ventilation path 63. This can suppress wetting due to rainwater, muddy water, and the like.

In this embodiment, it may be acceptable that the sub headlight units 13L and 13R are provided as an optional extra (an accessory or a custom part) to the motorcycle 10. In such a case, the screen 19 including the sub headlight units 13L and 13R is installed instead of a screen not including the sub headlight units 13L and 13R.

As thus far described, in the first and second embodiments, the sub headlight units 13L and 13R are arranged outside a vehicle body cover (front cover 18), and a part of the sub headlight units 13L and 13R is arranged rearward of the screen 19 (FIGS. 7 and 8). The sub headlight light sources 13La to 13Lc, 13Ra to 13Rc illuminate an area ahead and outward of the motorcycle 10 with respect to the width direction of the vehicle, from positions higher than the main headlight light source (the high beam light source 11 H and the low beam light source 11 L). This can suppress occurrence of a situation where the rider feels uncomfortable about a change in the illumination range in the course of an increase or decrease in the lean angle of the motorcycle 10, and also can suppress a size increase in the sub headlight units 13L and 13R.

In the first embodiment, the sub headlight units 13L and 13R that are members separate from the screen 19 are arranged rearward of the screen 19, and the sub headlight units 13L and 13R are visible through the screen 19.

In the second embodiment, the sub headlight units 13L and 13R are provided to the screen 19 and integrated with the screen 19, and a rear part of the sub headlight units 13L and 13R is arranged rearward of the screen 19.

However, the present teaching is not limited to this example. For example, it may be acceptable that a sub headlight unit integrated with a screen is entirely arranged rearward of a front surface of the screen. That is, in the second embodiment (FIG. 8), the lenses 134 integrated with the screen 19 protrude at the front surface side of the screen 19. However, according to the present teaching, it may be acceptable that lenses formed integrally with a screen protrude at the back surface side of the screen without protruding at the front surface side of the screen. A sub headlight unit that is a member separate from a screen may be provided to the screen.

The first and second embodiments illustrate a case where the sub headlight units 13L and 13R are provided to the top cover 60. However, the vehicle according to the present teaching does not always have to include the top cover 60. Additionally, according to the present teaching, even in a case where the vehicle includes a top cover, it is not always necessary that a sub headlight unit is provided to the top cover. According to the present teaching, it suffices that a sub headlight unit is arranged outside the vehicle body cover (the front cover 18 in the embodiments) including a main headlight light source. For example, it may be possible that the sub headlight unit is provided to an upper surface of the vehicle body cover (front cover 18).

In a case where the sub headlight unit is provided to the upper surface of the vehicle body cover, it is preferable that the sub headlight unit is arranged in a ventilation path that is defined by a lower surface of the screen and the upper surface of the vehicle body cover. This is because the sub headlight unit is in contact with headwind at a location outside the vehicle body cover and therefore a higher heat dissipation effect is exerted.

The sub headlight units 13L, 13R and the screen 19 constitute a screen unit of the present teaching. The sub headlight units 13L, 13R and the screen 19, which constitute the screen unit, may be an integrated member or may be separate members.

The lean angle sensor 22 and the vehicle speed sensor 23 correspond to a detection part for detecting variables available for obtaining the lean angle of the motorcycle 10. Although the detection part includes the lean angle sensor 22 and the vehicle speed sensor 23 in this embodiment, the present teaching is not limited to this example. For example, the detection part may include the lean angle sensor 22 while not including the vehicle speed sensor 23. The controller 20 corresponds to a control part of the present teaching. However, a hardware configuration of the present teaching is not limited to this example. The control part determines whether or not the lean angle of the motorcycle 10 has reached the reference value based on the variables detected by the detection part. At this time, it is not always necessary that the control part calculates the lean angle. Details of processing performed in the control part are not particularly limited. For example, it may be possible that a memory provided in the controller 20 serving as the control part stores, in the form of data, a table in which the angular velocity (roll rate) and the vehicle speed are associated with a result of whether or not the lean angle has reached the reference value. In this case, the control part refers to the table based on the angular velocity and the vehicle speed, and thereby can determine whether or not the lean angle has reached the reference value without calculating the lean angle.

In this embodiment, the lean angle is the angle of inclination of the vehicle body to the inner side of a curve relative to the upright state (vertical direction). However, the present teaching is not limited to this example. The lean angle may be the angle of inclination of the vehicle body to the inner side of a curve relative to a direction perpendicular to a road surface. As a method and a device for measuring the angle of inclination of the vehicle body to the inner side of a curve relative to the direction perpendicular to the road surface, conventionally known ones are adoptable.

This embodiment illustrates a case where the sub headlight unit 13 is a member separate from the control part (controller 20) and the detection part (the lean angle sensor 22 and the vehicle speed sensor 23). However, the present teaching is not limited to this example. The sub headlight unit may include at least one of the control part, a communication part, and the detection part.

This embodiment illustrates a case where the sub headlight light source is turned on in accordance with the lean angle. Instead, according to the present teaching, the sub headlight light source may be configured such that a turn-on function in accordance with the lean angle is manually activated or deactivated. In this case as well, the sub headlight light source is turned on not manually but in accordance with the lean angle. In the flasher, on the other hand, flashing/turn-off is manually switched. In this manner, the sub headlight light source is different from the flasher and the main headlight.

The sub headlight light source may be also configured such that an instruction for turn-on or turn-off is manually inputted. In such a case, when the instruction is not inputted, the sub headlight light source is turned on in accordance with the lean angle, while when the instruction is inputted, turn-on or turn-off is performed in accordance with the instruction. In this case as well, the sub headlight light source is different from the flasher, in that a function of turning on the sub headlight light source in accordance with the lean angle is provided.

In this embodiment, the number of sub headlight light sources that illuminate an area ahead and at one side with respect to the width direction of the vehicle is three. However, according to the present teaching, the number of sub headlight light sources that illuminate an area ahead and at one side with respect to the width direction of the vehicle is not particularly limited. The number may be one, or may be two or more.

It may be acceptable that one or more sub headlight light sources are provided at each of the right and left sides with respect to the width direction of the vehicle. Alternatively, it may be also acceptable that a plurality of sub headlight light sources are vertically aligned in a central portion with respect to the width direction of the vehicle.

Furthermore, in a case where a plurality of sub headlight light sources are provided at each of the right and left sides with respect to the width direction of the vehicle, the plurality of sub headlight light sources may be arranged side by side along a lower end edge of the screen when seen from the front side of the vehicle as illustrated in the embodiments described above, or alternatively may be arranged side by side along an outer end edge of the screen with respect to the width direction of the vehicle.

According to the present teaching, turning on the sub headlight light source in accordance with the lean angle is not necessarily limited to directly changing the sub headlight light source from a turn-off state to a turn-on state in accordance with the lean angle, but may also include gradually changing the sub headlight light source from the turn-off state to the turn-on state in accordance with the lean angle. Here, gradually changing the sub headlight light source from the turn-off state to the turn-on state in accordance with the lean angle includes continuously changing the sub headlight light source from the turn-off state to the turn-on state and stepwise changing the sub headlight light source from the turn-off state to the turn-on state. The turn-on state is not limited to a full light turn-on state at the rated power level, but may also include a dimmed light turn-on state in which the output is controlled to less than the output in the full light turn-on state. In the full light turn-on state, the turn-on may be performed with an output higher than the rated power (for example, with the maximum output). It is to be noted that the output in the dimmed light turn-on state is higher than the output in the turn-off state. Turning on the sub headlight light source in accordance with the lean angle may include changing the brightness of the sub headlight light source to a predetermined brightness higher than the brightness in the turn-off state in accordance with the lean angle.

In other words, turning on the sub headlight light source in accordance with the lean angle is not limited to the following case (i), but may also include the following cases (ii) to (iv).

(i) The sub headlight light source is directly or gradually changed from the turn-off state to the full light turn-on state in accordance with the lean angle.

(ii) The sub headlight light source is directly or gradually changed from the turn-off state to the dimmed light turn-on state in accordance with the lean angle.

(iii) The sub headlight light source is directly or gradually changed from the dimmed light turn-on state to the full light turn-on state in accordance with the lean angle.

(iv) The sub headlight light source is directly or gradually changed from a first dimmed light turn-on state to a second dimmed light turn-on state in accordance with the lean angle (the brightness in the second dimmed light turn-on state is higher than the brightness in the first dimmed light turn-on state).

Here, in a case where the sub headlight light source is a light source (for example, an LED) whose brightness is controlled under a pulse width modulation control, turning on the sub headlight light source in accordance with the lean angle may include continuously or gradually changing the duty cycle of the sub headlight light source from 0 to a value greater than 0 in accordance with the lean angle.

In the description of this embodiment, the sub headlight light source is turned on in accordance with the lean angle. Here, the sub headlight light source is turned on in accordance with the lean angle because the sub headlight light source functions mainly as a light for ensuring the field of view of the rider of the vehicle. Therefore, in a well-lit situation, for example, in daytime, the sub headlight light source may not necessarily be turned on in accordance with the lean angle.

[DESCRIPTION OF THE REFERENCE SIGNS]

| | |
|---|---|
| 10 | motorcycle (vehicle that leans into turns) |
| 11 | main headlight |
| 11H | high beam light source (main headlight light source) |
| 11 L | low beam light source (main headlight light source) |
| 12 | handlebar |
| 13L, 13R | sub headlight unit |
| 13La, 13Lb, 13Lc, 13Ra, 13Rb, 13Rc | sub headlight light source |
| 131 | substrate |
| 134 | inner lens |
| 135 | casing |
| 135a | reflection surface |
| 136 | heat dissipation fin |
| 14L, 14R | flasher |
| 15 | operation switch |
| 16 | front wheel |
| 17 | frontfork |
| 18 | front cover |
| 19 | screen |
| 20 | controller |
| 22 | lean angle sensor |
| 23 | vehicle speed sensor |
| 40 | rearview mirror |
| 50 | engine |
| 51 | fuel tank |
| 52 | seat |
| 53 | rear wheel |
| 55 | under cover |
| 60 | top cover |
| 61,62 | opening |
| 63, 64 | ventilation path |

## Claims

1. A vehicle that leans into turns including:

   a detection part that detects a variable available for obtaining a lean angle of the vehicle;
   a main headlight light source (11H, 11L) and a screen (19) having transparency, the main headlight light source (11H, 11L) being arranged in a vehicle body cover (18), the screen (19) being fixed to the vehicle body cover (18) and arranged above the main headlight light source (11H, 11L), and
   a sub headlight unit (13L, 13R) including a sub headlight light source (13La, 13Lb, 13Lc, 13Ra, 13Rb, 13Rc), the sub headlight unit (13L, 13R) being arranged outside the vehicle body cover (18), at least part of the sub headlight unit (13L, 13R) being arranged rearward of the screen,
   a control part that turns on the sub headlight light source (13La,13Lb,13Lc,13Ra,13Rb, 13Rc) in accordance with the lean angle of the vehicle obtained based on a result of detection by the detection part, wherein the sub headlight light source (13La, 13Lb, 13Lc, 13Ra,13Rb,13Rc) configured to be turned on in accordance with the lean angle of the vehicle is configured to illuminate, from a position higher than the main headlight light source (11 H,11 L), an area ahead and outward of the vehicle with respect to a width direction of the vehicle.

2. A vehicle that leans into turns according to claim 1, wherein the sub headlight unit (13L, 13R) is integrated with the screen (19), and arranged outside the vehicle body cover (18).

3. A vehicle that leans into turns according to claim 1, wherein the sub headlight unit (13L, 13R) is a member separate from the screen (19), and arranged outside the vehicle body cover (18).

4. A vehicle that leans into turns according to any one of claims 1 to 3, wherein the vehicle has a ventilation path (63) provided outside the vehicle body cover (18), the ventilation path (63) allowing headwind to pass therethrough from the front side of the screen (19) to the rear side of the screen (19),
   at least part of the sub headlight unit (13L, 13R) is arranged rearward of the screen (19), and exposed in the ventilation path (63) at a location outside the vehicle body cover (18).

5. A vehicle that leans into turns according to claim 4, wherein the sub headlight unit (13L, 13R) includes a lens (134) and a heat dissipation mechanism (136), the lens (134) allowing light emitted from the sub headlight light source (13La, 13Lb, 13Lc, 13Ra, 13Rb, 13Rc) to pass therethrough, the heat dissipation mechanism (136) being configured to dissipate heat from the sub headlight light source (13La, 13Lb, 13Lc, 13Ra, 13Rb, 13Rc), the part of the sub headlight unit (13L,13R) exposed in the ventilation path (63) is the lens (134) or the heat dissipation mechanism (136).

6. A vehicle that leans into turns according to claim 4 or 5, wherein the ventilation path (63) is formed to extend upward and rearward from an opening (61) of the ventilation path (63) which is provided at a front end thereof,
   the part of the sub headlight unit (13L, 13R) exposed in the ventilation path (63) is located above a lower end of the opening (61).

## Patentansprüche

1. Ein Fahrzeug, das sich in Kurven legt, beinhaltet:

   einen Erfassungs-Teil, der eine Variable erfasst, verfügbar um einen Neigungs-Winkel des Fahrzeugs zu erhalten;
   eine Haupt-Scheinwerfer-Lichtquelle (11 H, 11 L) und einen Schirm (19) der Transparenz hat, die Haupt-Scheinwerfer-Lichtquelle (11 H, 11 L) ist in einer Fahrzeug-Körper-Abdeckung (18) angeordnet, der Schirm (19) ist an der Fahrzeug-Körper-Abdeckung (18) fixiert und oberhalb der Haupt-Scheinwerfer-Lichtquelle (11 H, 11 L) angeordnet, und
   eine Unter-Scheinwerfer-Einheit (13L, 13R), die eine Unter-Scheinwerfer-Lichtquelle (13La, 13Lb, 13Lc, 13Ra, 13Rb, 13Rc) beinhaltet, die Unter-Scheinwerfer-Einheit (13L, 13R) ist außerhalb der Fahrzeug-Körper-Abdeckung (18) angeordnet, zumindest ein Teil der Unter-Scheinwerfer-Einheit (13L, 13R) ist hinter dem Schirm angeordnet,
   ein Steuer-Teil, der die Unter-Scheinwerfer-Lichtquelle (13La, 13Lb, 13Lc, 13Ra, 13Rb, 13Rc) gemäß dem Neigungs-Winkel des Fahrzeugs, erhalten aufgrund eines Ergebnisses der Erfassung durch den Erfassungs-Teil, anschaltet, wobei die Unter-Scheinwerfer-Lichtquelle (13La, 13Lb, 13Lc, 13Ra, 13Rb, 13Rc) die konfiguriert ist, um in Übereinstimmung mit dem Neigungs-Winkel des Fahrzeugs angeschaltet zu werden, ist konfiguriert von einer Position, höher als die Haupt-Scheinwerfer-Lichtquelle (11 H, 11 L), einem Bereich vor und außerhalb des Fahrzeugs mit Bezug auf eine Breiten-Richtung des Fahrzeugs auszuleuchten.

**2.** Ein Fahrzeug, das sich in Kurven legt gemäß Anspruch 1, wobei die Unter-Scheinwerfer-Einheit (13L, 13R) mit dem Schirm (19) integriert ist und außerhalb der Fahrzeug-Körper-Abdeckung (18) angeordnet ist.

**3.** Ein Fahrzeug, das sich in Kurven neigt gemäß Anspruch 1, wobei die Unter-Scheinwerfer-Einheit (13L, 13R) ein Element, getrennt von dem Schirm (19) ist und außerhalb der Fahrzeug-Körper-Abdeckung (18) angeordnet ist.

**4.** Ein Fahrzeug, das sich in Kurven neigt gemäß irgendeinem der Ansprüche 1 bis 3, wobei das Fahrzeug einen Ventilations-Durchgang (63) hat, vorgesehen außerhalb der Fahrzeug-Körper-Abdeckung (18), der Ventilations-Durchgang (63) gestattet Fahrtwind von der Vorder-Seite des Schirms (19) zu der Rückseite des Schirms (19), hindurchzutreten, zumindest ein Teil der Unter-Scheinwerfer-Einheit (13L, 13R) ist hinter dem Schirm (19) angeordnet und in dem Ventilations-Durchgang (63) freigelegt, an einem Ort außerhalb der Fahrzeug-Körper-Abdeckung (118).

**5.** Ein Fahrzeug, das sich in Kurven legt gemäß Anspruch 4, wobei die Unter-Scheinwerfer-Einheit (13L, 13R) eine Licht-Scheibe (134) und einen Wärme-Abgabe-Mechanismus (136) beinhaltet, die Licht-Scheibe (134) gestattet Licht, emittiert von der Unter-Scheinwerfer-Lichtquelle (13La, 13Lb, 13Lc, 13Ra, 13Rb, 13Rc), hindurchzutreten, der Wärme-Abgabe-Mechanismus (136) ist konfiguriert, um Wärme von der Unter-Scheinwerfer-Lichtquelle (13La, 13Lb, 13Lc, 13Ra, 13Rb, 13Rc) abzugeben, der Teil der Unter-Scheinwerfer-Einheit (13L, 13R), der in den Ventilations-Durchgang (63) freiliegt, ist die Licht-Scheibe (134) oder der Wärme-Abgabe-Mechanismus (136).

**6.** Ein Fahrzeug, das sich in Kurven legt gemäß Anspruch 4 oder 5, wobei der Ventilations-Durchgang (63) ausgebildet ist, sich nach oben und hinten, von einer Öffnung (61) des Ventilations-Durchgangs (63), der an einem vorderen Ende desselben vorgesehen ist, zu erstrecken, der Teil der Unter-Scheinwerfer-Einheit (13La, 13R), der in den Ventilations-Durchgang (63) freiliegt, ist oberhalb eines unteren Endes der Öffnung (61) angeordnet.

## Revendications

**1.** Véhicule qui s'incline dans les virages comprenant :

Un élément de détection qui détecte une variable disponible pour l'obtention d'un angle d'inclinaison du véhicule ; une principale source de lumière de phare (11H, 11L) et un filtre (19) présentant de la transparence, la principale source de lumière de phare (11H, 11L) étant disposée dans un capot de carrosserie de véhicule (18), le filtre (19) étant fixé au capot de carrosserie de véhicule (18) et placé par-dessus la principale source de lumière de phare (11H, 11L), et un bloc optique auxiliaire (13L, 13R) incluant une source auxiliaire de lumière de phare (13La, 13Lb, 13Lc, 13Ra, 13Rb, 13Rc), le bloc optique auxiliaire (13L, 13R) étant placé hors du capot de carrosserie de véhicule (18), au moins une partie du bloc optique auxiliaire (13L, 13R) étant placée à l'arrière du filtre, un élément de commande qui met en marche la source auxiliaire de lumière de phare (13La, 13Lb, 13Lc, 13Ra, 13Rb, 13Rc) selon l'angle d'inclinaison du véhicule obtenu sur la base d'un résultat de la détection par l'élément de détection, où la source auxiliaire de lumière de phare (13La, 13Lb, 13Lc, 13Ra, 13Rb, 13Rc) configurée pour être mise en marche selon l'angle d'inclinaison du véhicule est configurée pour éclairer, depuis une position supérieure à la principale source de lumière de phare (11H, 11L), une zone vers l'avant et vers l'extérieur du véhicule par rapport au sens de la largeur du véhicule.

**2.** Véhicule qui s'incline dans les virages selon la revendication 1, où le bloc optique auxiliaire (13L, 13R) est intégré au filtre (19), et placé hors du capot de carrosserie de véhicule (18).

**3.** Véhicule qui s'incline dans les virages selon la revendication 1, où le bloc optique auxiliaire (13L, 13R) est un élément séparé du filtre (19), et placé hors du capot de carrosserie de véhicule (18).

**4.** Véhicule qui s'incline dans les virages selon l'une quelconque des revendications 1 à 3, où le véhicule présente un passage de ventilation (63) proposé en dehors du capot de carrosserie de véhicule (18), le passage de ventilation (63) permettant au vent de face de passer à travers depuis la face avant du filtre (19) vers la face arrière du filtre (19), au moins une partie du bloc optique auxiliaire (13L, 13R) est placée à l'arrière du filtre (19), et exposée au passage de ventilation (63) à un emplacement situé en dehors du capot de carrosserie de véhicule (18).

5. Véhicule qui s'incline dans les virages selon la revendication 4, où le bloc optique auxiliaire (13L, 13R) comprend une lentille (134) et un mécanisme de dissipation de chaleur (136), la lentille (134) permettant à la lumière émise depuis la source auxiliaire de lumière de phare (13La, 13Lb, 13Lc, 13Ra, 13Rb, 13Rc) de passer à travers, le mécanisme de dissipation de chaleur (136) étant configuré pour dissiper la chaleur depuis la source auxiliaire de lumière de phare (13La, 13Lb, 13Lc, 13Ra, 13Rb, 13Rc), la partie du bloc optique auxiliaire (13L, 13R) exposée au passage de ventilation (63) est la lentille (134) ou le mécanisme de dissipation de chaleur (136).

6. Véhicule qui s'incline dans les virages selon la revendication 4 ou 5, où le passage de ventilation (63) est formé pour s'étendre vers le haut et vers l'arrière depuis une ouverture (61) du passage de ventilation (63) qui est proposée à une extrémité avant de celui-ci,
la partie du bloc optique auxiliaire (13L, 13R) exposée au passage de ventilation (63) est localisée au-dessus d'une extrémité inférieure de l'ouverture (61).

FIG.1

FIG.2

FIG.3

FIG.4

FIG.5

FIG.6

EP 2 669 162 B1

FIG.7

FIG.8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1473215 A1
- CN 1769127 A
- EP 2641780 A2
- WO 2010061651 A